Europäisches Patentamt

(19) European Patent Office

Office européen des brevets

(11) **EP 0 914 365 B1**

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(21) Anmeldenummer: **97940009.0**

(22) Anmeldetag: **21.07.1997**

(51) Int Cl.[7]: **C08J 3/12**, C04B 24/26

(86) Internationale Anmeldenummer:
**PCT/EP97/03929**

(87) Internationale Veröffentlichungsnummer:
**WO 98/03576 (29.01.1998 Gazette 1998/04)**

(54) **VERWENDUNG VON PHENOLSULFONSÄURE-FORMALDEHYD-KONDENSATIONSPRODUKTEN ALS TROCKNUNGSHILFSMITTEL**

USE OF PHENOLSULFONIC ACID-FORMALDEHYDE CONDENSATION PRODUCTS AS DRYING AIDS

UTILISATION DE PRODUITS DE CONDENSATION D'ACIDE PHENOLSULFONIQUE-FORMALDEHYDE COMME ADJUVANTS DE SECHAGE

(84) Benannte Vertragsstaaten:
**BE DE FR GB IT SE**

(30) Priorität: **22.07.1996 DE 19629526**

(43) Veröffentlichungstag der Anmeldung:
**12.05.1999 Patentblatt 1999/19**

(73) Patentinhaber: **BASF AKTIENGESELLSCHAFT 67056 Ludwigshafen (DE)**

(72) Erfinder:
• **PAKUSCH, Joachim D-67065 Ludwigshafen (DE)**
• **ANGEL, Maximilian D-67105 Schifferstadt (DE)**
• **ROSER, Joachim D-68165 Mannheim (DE)**
• **DRAGON, Andree D-67346 Speyer (DE)**
• **SACK, Heinrich D-67454 Ha sloch (DE)**

(74) Vertreter: **Kinzebach, Werner, Dr. et al Reitstötter, Kinzebach & Partner, Postfach 21 11 60 67011 Ludwigshafen (DE)**

(56) Entgegenhaltungen:
EP-A- 0 407 889       EP-A- 0 520 182
EP-A- 0 573 036       DE-A- 2 445 813

## Beschreibung

Die vorliegende Erfindung betrifft die Verwendung von Phenolsulfonsäure-Formaldehyd-Kondensationsprodukten als Trocknungshilfsmittel, insbesondere bei der Sprühtrocknung wäßriger Polymerisat-dispersionen.

Weiterhin betrifft die vorliegende Erfindung ein Verfahren zur Herstellung von in wäßrigem Medium redispergierbaren Polymerisatpulvern sowie die redispergierbaren Polymerisatpulver und ihre Verwendung.

Wäßrige Polymerisatdispersionen finden breite Anwendung, beispielsweise als Bindemittel, insbesondere für Kunstharzputze oder hochpigmentierte Innenfarben, Klebstoffe oder Beschichtungsmittel. Häufig ist es jedoch erwünscht, nicht die wäßrige Polymerisatdispersion, sondern das Polymerisat in Pulverform einzusetzen.

Um das Polymerisat in Pulverform zu erhalten, muß die Dispersion einem Trocknungsvorgang unterzogen werden, beispielsweise einer Sprühtrocknung oder auch einer Gefriertrocknung. Bei der Sprühtrocknung wird die Polymerisatdispersion in einem Warmluftstrom versprüht und entwässert, wobei die Trockenluft und die versprühte Dispersion vorzugsweise im Gleichstrom durch den Trockner geführt werden.

Das erhaltene Polymerisatpulver hat jedoch den Nachteil, daß seine Redispergierbarkeit in wäßrigem Medium im allgemeinen nicht voll zu befriedigen vermag, weil die bei der Redispergierung resultierende Polymerisatteilchen-Durchmesserverteilung in der Regel von derjenigen in der wäßrigen Ausgangsdispersion verschieden ist. Der Grund dafür liegt darin, daß wäßrige Polymerisatdispersionen im Unterschied zu Polymerisatlösungen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (Stippen, Koagulat) zu verkleinern. Dies kann im Zustand der dispersen Verteilung im wäßrigem Medium durch Zusatz von Dispergiermitteln, wie Emulgatoren und Schutzkolloiden auch für längere Zeit verhindert werden. Bei der Trocknung wäßriger Polymerisatdispersionen reicht nun aber die Wirkung der Dispergiermittel häufig nicht mehr aus und es kommt in bestimmtem Umfang zu irreversibler Sekundärteilchenbildung. Das heißt, die Sekundärteilchen bleiben bei der Redispergierung erhalten und mindern die anwendungstechnischen Eigenschaften der im Rahmen der Redispergierung erhältlichen wäßrigen Polymerisatdispersion.

Um die Sekundärteilchenbildung beim Trocknen zu verhindern oder zumindest zu reduzieren, ist es seit längerem bekannt, sogenannte Trocknungshilfsmittel einzusetzen. Diese werden vielfach als Sprühhilfsmittel bezeichnet, da die Sprühtrocknung die Bildung irreversibel agglomerierter Sekundärteilchen besonders fördert. Dieser Effekt ist um so ausgeprägter, je niedriger die Glasübergangstemperatur (und damit die Erweichungstemperatur oder die Mindestfilmbildetemperatur) der Polymerteilchen ist, insbesondere dann, wenn sie unterhalb der Trocknungstemperatur liegt. Gleichzeitig mindern Trocknungshilfsmittel in der Regel die Ausbildung von an der Trocknerwand haftenbleibendem Polymerbelag und bewirken so eine Erhöhung der Pulverausbeute.

Die Verwendung von Trocknungshilfsmitteln ist aus zahlreichen Publikationen bekannt. So beschreibt die DE-A-24 45 813 ein in wäßrigen Systemen redispergierbares pulverförmiges Polymer, das als Trocknungshilfsmittel 1 bis 20 Gew.-% eines wasserlöslichen, sulfonsäure- oder sulfonatgruppenhaltigen Kondensationsproduktes aus aromatischen Kohlenwasserstoffen und Formaldehyd enthält. Bei diesen Kondensationsprodukten handelt es sich insbesondere um Phenolsulfonsäure- oder Naphthalinsulfonsäure-Formaldehyd-Kondensate. Über das Molekulargewicht der verwendeten Kondensationsprodukte finden sich keine Angaben. Es wird darauf hingewiesen, daß die Trocknung der Polymerisatpulver bei Temperaturen unterhalb der Erweichungstemperatur durchgeführt werden soll.

Die EP-A-78 449 beschreibt ein Verfahren zur Herstellung von blockfesten, in Wasser redispergierbaren Polymerisatpulvern durch Sprühtrocknung von wäßrigen Dispersionen von Polymerisaten mit Glasübergangstemperaturen unterhalb 50°C. Die Dispersionen enthalten als Sprühhilfsmittel ein wasserlösliches Copolymerisat aus Vinylpyrrolidon und Vinylacetat und/oder ein wasserlösliches Alkali- und/oder Erdalkalisalz eines Naphthalinsulfonsäure-Formaldehyd-Kondensationsproduktes. Auch hier finden sich keine Angaben über das Molekulargewicht der verwendeten Naphthalinsulfonsäure-Formaldehyd-Kondensationsprodukte. Auffällig ist die vergleichsweise große Menge an Sprühhilfsmittel bei alleiniger Verwendung der Naphthalinsulfonsäure-Formaldehyd-Kondensationsprodukte (30 Gew.-% in Bsp. 4, 50 Gew.-% in Bsp. 5, 30 Gew.-% in Bsp. 6, jeweils bezogen auf die Polymerisate). Dies führt zu einer negativen Beeinflussung der Bindemitteleigenschaften der Polymerisatpulver, z.B. wird die Fließfähigkeit von damit gebundenen Massen in unerwünschtem Maß erhöht (vgl. EP 407 889) oder das Abbindeverhalten zementöser Massen verzögert.

In ähnlicher Weise beschreibt die EP-A-407 889 die Verwendung eines wasserlöslichen Alkali- oder Erdalkalisalzes eines Phenolsulfonsäure-Formaldehyd-Kondensationsproduktes als Sprühhilfsmittel zur Herstellung von in Wasser redispergierbaren Polymerisatpulvern aus wäßrigen Polymerisatdispersionen. Auch hier finden sich keine Angaben über das Molekulargewicht der verwendeten Kondensationsprodukte. Die Redispergierbarkeit von Polymerisatpulvern, die bei Verwendung handelsüblicher Phenolsulfonsäure-Formaldehyd-Kondensationsprodukte erhalten werden, ist jedoch ebensowenig zufriedenstellend wie die Pulverausbeute beim Trocknen.

Der vorliegenden Erfindung liegt die Aufgabe zugrunde, Trocknungshilfsmittel zur Verfügung zu stellen, die es erlauben, aus Polymerisatdispersionen Polymerpulver herzustellen, die in Wasser gut redispergierbar sind und die die Nachteile des Standes der Technik nicht aufweisen.

Überraschenderweise wurde gefunden, daß diese Aufgabe gelöst wird, wenn man Phenolsulfonsäure-Formaldehyd-Kondensationsprodukte mit einem zahlenmittleren Molekulargewicht $M_n$ < 1500 als Trocknungshilfsmittel verwendet.

Gegenstand der vorliegenden Erfindung ist daher die Verwendung von Phenolsulfonsäure-Formaldehyd-Kondensationsprodukten mit einem zahlenmittleren Molekulargewicht $M_n$ < 1500 Dalton oder deren Salzen als Hilfsmittel bei der Trocknung wäßriger Polymerisatdispersionen.

Vorzugsweise weisen die Kondensationsprodukte mittlere Molekulargewichte $M_n$ im Bereich von 500 bis 1500, insbesondere 600 bis 1200 Dalton auf, bestimmt mittels Gelpermeationschromatographie wie in den Beispielen bei der Herstellung der Sprühhilfsmittel beschrieben. Die Uneinheitlichkeit (definiert als $M_w/M_n$) liegt im Bereich von 5 bis 15, vorzugsweise im Bereich von 5 bis 11. Der Anteil an Kondensaten mit Molmassen oberhalb 10.000 Dalton macht vorzugsweise weniger als 25 Gew.-%, insbesondere weniger als 20 Gew.-% des gesamten Kondensationsprodukts aus.

Wird das Kondensationsprodukt in Form seiner Salze eingesetzt, verwendet man in der Regel Alkali- oder Erdalkalimetallsalze oder Ammoniumsalze, d.h. Salze mit Ammoniak oder organischen Aminen wie Triethanolamin, Diethanolamin oder Triethylamin. Bevorzugt werden die Erdalkalimetallsalze und insbesondere die Calciumsalze.

Die Herstellung der erfindungsgemäß zur Anwendung kommenden Trocknungshilfsmittel erfolgt in der Regel durch Kondensation von Phenolsulfonsäure mit Formaldehyd unter sauren, insbesondere schwefelsauren Reaktionsbedingungen. Dabei kann die Phenolsulfonsäure vorgelegt oder in situ durch Sulfonierung nach bekannten Methoden (vgl. J. March, Advanced Organic Chemistry, 3rd ed, John Wiley, New York 1985, S. 473 ff. und dort zitierte Literatur) hergestellt werden. Vorzugsweise wird Phenolsulfonsäure in situ durch Sulfonierung mit Schwefelsäure, vorzugsweise konzentrierter Schwefelsäure, hergestellt. Die Kondensation erfolgt durch Umsetzung von Phenolsulfonsäure mit Formaldehyd unter sauren Reaktionsbedingungen, vorzugsweise unter schwefelsauren Reaktionsbedingungen, insbesondere in konzentrierter Schwefelsäure. Wird die Phenolsulfonsäure in situ hergestellt, leitet man die Kondensation durch Zugabe von Formaldehyd zum schwefelsauren Reaktionsgemisch ein. Das molare Verhältnis Formaldehyd: Phenolsulfonsäure liegt im Bereich von 1:1 bis 1:2, vorzugsweise im Bereich von 1:1,3 bis 1:1,7. Vorzugsweise wird Formaldehyd als wäßrige Lösung zugegeben. Um das gewünschte Molekulargewicht einzustellen, wird die Kondensationsreaktion in der Regel bei Temperaturen im Bereich von 90 bis 110°C, vorzugsweise bei etwa 100°C durchgeführt. Die Reaktionsdauer beträgt in der Regel 2 bis 6 h, vorzugsweise 3 bis 5 h. Werden die Salze als Trocknungshilfsmittel gewünscht, wird im Anschluß an die Kondensation eine Neutralisation mit einem geeigneten basischen Metallsalz oder einem Amin durchgeführt, wobei sowohl Metallsalz oder Amin vorzugsweise als wäßrige Lösung oder Dispersion verwendet werden.

Gegenstand der vorliegenden Erfindung ist auch ein Verfahren zur Herstellung eines Polymerisatpulvers durch Trocknung einer wäßrigen Polymerisatdispersion, wobei man als Trocknungshilfsmittel mindestens ein Phenolsulfonsäure-Formaldehyd-Kondensationsprodukt der oben beschriebenen Art oder ein Salz davon verwendet. Bei alkalisch eingestellten Polymerisatdispersionen kommen die Kondensationsprodukte als Salz, bei sauer eingestellten Polymerisaten in der Säureform zur Anwendung.

Die zur Anwendung kommende Menge an Trocknungshilfsmitteln beträgt vorzugsweise 1 bis 30 Gew.-%, bezogen auf das Gewicht des Polymerisates der Dispersion, vorzugsweise 3 bis 15 Gew.-% und besonders bevorzugt 5 bis 12 Gew.-%.

Besonders vorteilhaft sind die erfindungsgemäßen Verbindungen zur Trocknung von Polymerisatdispersionen, bei denen das Polymerisat eine Glasübergangstemperatur (DSC, midpoint temperature, ASTM D 3418-82) $\leq$65°C, vorzugsweise $\leq$50°C, besonders bevorzugt $\leq$25°C und ganz besonders bevorzugt $\leq$0°C aufweist. Im allgemeinen ist die Glasübergangstemperatur der Polymerisate $\geq$-60°C, vorzugsweise $\geq$-40°C und insbesondere $\geq$-20°C.

Dabei ist es oft hilfreich, die Glasübergangstemperatur Tg des dispergierten Polymerisats abzuschätzen. Nach Fox (T.G. Fox, Bull. Am. Phys. Soc. (Ser. II) $\underline{1}$, 123 [1956] und Ullmanns Encyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g{}^1} + \frac{X^2}{T_g{}^2} \ldots \frac{X^n}{T_g{}^n}$$

wobei $X^1$, $X^2$, ..., $X^n$ die Massenbrüche 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Vorzugsweise handelt es sich um Polymerisate, die aufgebaut sind aus:

(a) 80 bis 100 Gew.-% wenigstens eines Monomers, das ausgewählt ist unter vinylaromatischen Verbindungen, Estern aus $\alpha,\beta$-monoethylenisch ungesättigten $C_3$-$C_6$-Carbonsäuren und $C_1$-$C_{12}$-Alkanolen, vorzugsweise $C_1$-$C_8$-Alkanolen, Vinyl- und Allylestern von $C_1$-$C_{12}$-Carbonsäuren und Butadien, und

(b) 0 bis 20 Gew.-% wenigstens eines sonstigen Monomers, das wenigstens eine ethylenisch ungesättigte Gruppe aufweist.

Hierbei beziehen sich die Ausdrücke $C_n$-$C_m$ auf die im Rahmen der Erfindung mögliche Anzahl der Kohlenstoffe einer jeweiligen Verbindungsklasse. Alkylgruppen können linear oder verzweigt sein. $C_n$-$C_m$-Alkylaryl steht für Arylgruppen die einen $C_n$-$C_m$-Alkylrest tragen.

Beispiele für vinylaromatische Verbindungen sind Styrol, $\alpha$-Methylstyrol oder Vinyltoluole, wie o-Vinyltoluol.

Bei den Estern von $\alpha,\beta$-monoethylenisch ungesättigten Carbonsäuren handelt es sich insbesondere um Ester der Acrylsäure, Methacrylsäure, Maleinsäure, Fumarsäure oder Itaconsäure. Beispiele für solche Ester sind Methyl(meth)acrylat, Ethyl(meth)acrylat, n-Butyl(meth)acrylat, iso-Butyl (meth)acrylat, t-Butyl(meth)acrylat, Ethylhexyl(meth)acrylat, Decyl(meth)acrylat oder Dodecyl(meth)acrylat, Dimethylmaleinat, Di-n-butylmaleinat, oder Di-n-butylfumarat.

Brauchbare Vinyl- und Alkylester sind Vinylacetat, Vinylpropionat, Vinyl-n-butyrat, Vinyllaurat und Vinylstearat sowie die entsprechenden Allylester.

Besonders bevorzugte Monomere (a) sind n-Butylacrylat, tert.-Butylacrylat, 2-Ethylhexylacrylat, Methylmethacrylat, tert.-Butylmethacrylat, Vinylacetat, Vinylpropionat, Butadien und Styrol.

Bei den Monomeren (b) handelt es sich vorzugsweise um Monomere (b'), die eine erhöhte Wasserlöslichkeit aufweisen. Hierzu zählen die oben genannten $\alpha,\beta$-monoethylenisch ungesättigten $C_3$-$C_6$-Carbonsäuren, deren Amide, Mono- oder Dialkylamide, N-Alkylolamide und Hydroxyalkylester sowie die Nitrile $\alpha,\beta$-ethylenisch ungesättigter Carbonsäuren. Brauchbar sind auch die N-Vinylderivate von cyclischen Lactamen und die Mono- oder Dialkylaminoalkylamide der erwähnten $C_3$-$C_6$-Carbonsäuren und deren Quaternisierungsprodukte.

Besonders bevorzugte Monomere (b') sind Acrylamid, Methacrylamid, Acrylsäure, Methacrylsäure, Acrylnitril, Methacrylnitril, 2-Acrylamido-2-methylpropansulfonsäure, Vinylpyrrolidon, Hydroxyethylacrylat, Hydroxyethylmethacrylat, Hydroxypropylacrylat, Hydroxypropylmethacrylat, N-Methylolacrylamid, N-Methylolmethacrylamid, quarternisiertes Vinylimidazol, N,N-Dialkylaminoalkyl(meth)acrylate, N,N-Dialkylaminoalkyl(meth)acrylamide, Trialkylammoniumalkyl(meth)acrylate und Trialkylammoniumalkyl(meth)acrylamide.

Die Polymerisate können als Monomere (b) auch weitere Monomere (b") enthalten, die den aus den Polymerisaten erhältlichen Polymerfilmen eine höhere Festigkeit verleihen. Solche Monomere (b") umfassen Verbindungen, die wenigstens zwei nicht konjugierte, ethylenische Doppelbindungen enthalten. Hierzu zählen die Diester von Dihydroxy-Verbindungen mit $\alpha,\beta$-ethylenisch ungesättigten Dicarbonsäuren, wie Ethylenglykoldi(meth)acrylat, Propylenglykoldi(meth)acrylat, 1,3-Butylen- und 1,4-Butlyenglykoldi(meth)acrylat und 2,2-Dimethylpropylenglykoldi(meth)acrylat, die Vinyl- und Allylester von Dicarbonsäuren, wie Divinyl- und Diallylmaleinat, Divinyl- und Diallylfumarat, Divinyl- und Diallylphthalat, ferner Divinylbenzol, Cyclopentadienylacrylat und -methacrylat, Cyclohexenylacrylat und -methacrylat, Tricyclodecenylacrylat und -methacrylat, N,N'-Divinylimidazolin-2-on und Triallylcyanurat. Derartige Verbindungen werden im Regelfall in Mengen bis zu 5 Gew.-%, bezogen auf die Gesamtmonomermenge, eingesetzt.

Weitere Beispiele für Monomere (b") sind Monomere mit Siloxangruppen wie Vinyltrialkoxisilane, z. B. Vinyltrimethoxisilan, Alkylvinyldialkoxisilane, z. B. Methylvinyldialkoxisilan, oder (Meth)acryloxyalkyltrialkoxisilane, z. B. (Meth)acryloxypropyltrimethoxysilan und (Meth)acryloxypropyltriethoxysilan. Diese Siloxanmonomere können in Mengen von bis zu 2 Gew.-%, vorzugsweise 0,05 bis 1 Gew.-%, bezogen auf das Gesamtgewicht der Monomere, eingesetzt werden.

Bevorzugte Polymerisatdispersionen sind weiterhin solche, bei denen der gewichtsmittlere Durchmesser $d_w$ der dispergierten Polymerisatpartikel $\geq 100$ nm und besonders bevorzugt $\geq 300$ nm ist. Üblicherweise beträgt $d_w \leq 2000$ nm. Es ist ferner günstig, wenn die Durchmesser der dispergierten Polymerisatpartikel über einen breiten Durchmesserbereich verteilt sind.

Der $d_w$-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben.

Ein geeignetes Maß zur Charakterisierung der Breite der Durchmesserverteilung ist der Quotient $Q = (d_{90}-d_{10})/d_{50}$, wobei $d_m$ der Durchmesser ist, der von m Gew.-% der dispergierten Polymerisatpartikel nicht überschritten wird. Vorzugsweise beträgt Q 0,5 bis 1,5. Die Herstellung von Polymerisatdispersionen mit einer derartigen Teilchenverteilungsbreite ist dem Fachmann bekannt, z.B. aus der DE-A-43 07 683.

Das Verhältnis von gewichtsmittlerem Molekulargewicht $M_w$ zu zahlenmittlerem Molekulargewicht $M_n$ der Polymerisate kann 1 bis 30 bzw. 1 bis 20 oder 1 bis 8 betragen. Das Molekulargewicht kann somit im wesentlichen einheitlich oder über eine gewisse Breite verteilt sein.

Die Herstellung der zu trocknenden Polymerisatdispersionen ist bekannt. Im allgemeinen erfolgt sie durch radikalische Polymerisation, die vorzugsweise in polaren Lösungsmitteln, insbesondere in Wasser durchgeführt wird. Zur Einstellung des gewünschten Molekulargewichtes können das Molekulargewicht regelnde Substanzen mitverwendet werden. Geeignete Molekulargewichtsregler sind z.B. Verbindungen, die eine Thiolgruppe und/oder eine Silangruppe aufweisen (z.B. t-Dodecyl-, n-Dodecylmercaptan oder Mercaptopropyltrimethoxysilan), Allylalkohole oder Aldehyde, wie Formaldehyd, Acetaldehyd etc.

Geeignete Starter sind z.B. anorganische Peroxide, wie Natriumperoxodisulfat oder Azoverbindungen. Die Polymerisation kann je nach Monomerenzusammensetzung als Lösungs- oder Emulsionspolymerisation erfolgen.

Falls die Polymerisatdispersion durch Emulsionspolymerisation hergestellt wird, erfolgt dies in üblicher Weise. Im allgemeinen verwendet man ein Schutzkolloid, wie Polyvinylalkohol, Polyvinylpyrrolidon oder Cellulosederivate oder anionische und/oder nichtionische Emulgatoren, wie ethoxylierte Mono-, Di- oder Trialkylphenole, ethoxylierte Fettalkohole und Alkali- oder Ammoniumsalze von $C_8$-$C_{12}$-Alkylsulfaten, Schwefelsäurehalbestern ethoxylierter $C_{12}$-$C_{18}$-Alkanole, $C_{12}$-$C_{18}$-Alkylsulfonsäuren, $C_9$-$C_{18}$-Alkylarylsulfonsäuren und sulfonierten Alkyldiphenylethern. Die Polymerisationstemperatur liegt im allgemeinen im Bereich von 50 bis 120°C, insbesondere 70 bis 100°C.

Zur Einstellung der Polymerteilchengröße und ihrer Verteilung kann man die Emulsionspolymerisation in Anwesenheit eines Saatlatex durchführen. Der Saatlatex kann separat oder in situ hergestellt werden. Verfahren hierzu sind aus dem Stand der Technik bekannt (siehe EP-A 567 811, EPA 567 812, EP-A 567 819, EP-B 40 419, EP-A 129 699, DE-A 31 47 008, DE-A 42 13 967 und DE-A 42 13 968 auf deren Inhalt in vollem Umfang Bezug genommen wird). In einer anderen Ausführungsform der vorliegenden Erfindung werden die Polymerisatdispersionen in Abwesenheit eines Saatlatex hergestellt. In diesem Fall kann man die Teilchengröße durch oberflächenaktive Verbindungen, wie Schutzkolloide oder Emulgatoren, einstellen.

Bei der Dispersion kann es sich um eine Primärdispersion handeln, d.h. um eine Polymerisatdispersion, die nach der Methode der radikalischen, wäßrigen Emulsionspolymerisation unmittelbar erhalten wurde. Es kann sich auch um eine Sekundärdispersion handeln, d.h. ein durch Lösungspolymerisation erhaltenes Polymerisat wird nachträglich in eine wäßrige Polymerdispersion überführt.

Die Trocknung der Polymerisatdispersion kann in üblicher Weise erfolgen, beispielsweise durch Gefriertrocknung oder vorzugsweise durch Sprühtrocknung. Bei einer Sprühtrocknung wird so vorgegangen, daß die Eingangstemperatur des Warmluftstroms im Bereich von 100 bis 200°C, vorzugsweise 120 bis 160°C und die Ausgangstemperatur des Warmluftstroms im Bereich von 30 bis 90°C, vorzugsweise 60 bis 80°C, liegt. Das Versprühen der wäßrigen Polymerisatdispersion im Warmluftstrom kann beispielsweise mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

Die erfindungsgemäß zur Anwendung kommenden Naphthalinsulfonsäure-Formaldehyd-Kondensationsprodukte können der zu trocknenden Dispersion als wäßrige Lösung oder als Feststoff vor dem Trocknen zugesetzt werden. Handelt es sich um eine Primärdispersion, kann das Trocknungshilfsmittel vor, während und/oder nach der Emulsionspolymerisation zugegeben werden.

Neben den erfindungsgemäßen Trocknungshilfsmitteln können zusätzlich auch bekannte Trocknungshilfsmittel, wie Polyvinylalkohol, Polyvinylpyrrolidon, Naphthalinsulfonsäure-Formaldehyd-Kondensate, Homopolymerisate der 2-Acrylamido-2-methylpropansulfonsäure etc., mitverwendet werden. Auch Antibackmittel, wie hochdisperse Kieselsäure, die üblicherweise für die Trocknung von wäßrigen Polymerisatdispersionen verwendet werden, können eingesetzt werden, um ein Zusammenbacken des Polymerisatpulvers bei der Lagerung zu verhindern. Bei einer Sprühtrocknung werden die Antibackmittel in der Regel separat zugedüst.

Gegenstand der vorliegenden Erfindung sind auch die erfindungsgemäß erhältlichen Polymerisatpulver. Sie eignen sich als Bindemittel in hydraulisch abbindenden Massen, Anstrichstoffen, Lacken, Klebstoffen, Beschichtungsmassen (insbesondere für Papier) und Kunstharzputzen, wie sie in der EP-A-629 650 beschrieben sind.

In besonderer Weise eignen sich die erfindungsgemäß erhältlichen Polymerisatpulver zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 19623413.3 verwiesen.

In typischer Weise enthalten die Trockenzusammensetzungen mineralischer Bindebaustoffe, bezogen auf die Menge an mineralischem Bindemittel, 0,1 bis 20 Gew.-% modifizierendes Polymerisatpulver.

Zur Verbesserung ihrer Verarbeitungseigenschaften setzt man den mineralischen Bindebaustoffen vielfach Cellulosederivate und Microsilica zu. Erste wirken üblicherweise verdickend und letztere bilden normalerweise Thixotropierungsmittel, die die Fließfähigkeit des wäßrigen Mörtels vor seiner Verfestigung im aufgebrachten Ruhestand zusätzlich erniedrigen. Calciumcarbonat und Quarzsand bilden in der Regel die übrigen Zuschläge. Durch Zusatz von Entschäumern (unter dem Aspekt "Trockenmörtel" vorzugsweise in Pulverform) kann im verfestigten Zustand ein praxisgerechter Luftporengehalt (5 bis 20 Vol.-%) des verfestigten zementösen Mörtel erreicht werden.

Die erfindungsgemäß erhältlichen Polymerisatpulver eignen sich z.B. zur Modifizierung von zementösen Reparatur- oder Armierungsmörteln. Hierbei weisen übliche Armierungsmörtel zur Steigerung ihrer Rißüberbrückungsfähigkeit noch natürliche oder synthetische Fasern aus Materialien wie z.B. Dralon (Länge z.B. 1 bis 10 mm, längenbezogene Masse z.B. 3 bis 10 dtex) auf.

Bei höchsten Rißüberbrückungsanforderungen wird man dem zementösen Armierungsmörtel, bezogen auf enthaltenen Zement, 9 bis 20, bei geringeren Rißüberbrückungsanforderungen 4 bis 9 Gew.-% modifizierendes Polymerisatpulver zusetzen. Lediglich bei besonders geringen Rißüberbrückungsanforderungen wird sich die zugesetzte Menge an modifizierendem Polymerisatpulver, in entsprechender Weise bezogen, auf 0,1 bis 4 Gew.-% beschränken.

Typische Armierungsmörtel bestehen als mineralische Bindebaustofftrockenzubereitung aus

20 bis 60, vorzugsweise 20 bis 50 Gew.-% mineralischem Bindemittel (vorzugsweise ausschließlich Zement)

0,1 bis 20 häufig 0,1 bis 10 Gew.-% erfindungsgemäß erhältlichem, modifizierendem Polymerisatpulver,

bis zu 25 Gew.-% an sich üblichen Hilfsmitteln (z.B. Entschäumer oder Verdicker) und als Restmenge Zuschlägen wie z.B. Sand, Füllstoffe (z.B. $CaCO_3$), Pigmente (z.B. $TiO_2$) natürliche und/oder synthetische Fasern.

Die nachfolgenden Beispiele erläutern die Erfindung, ohne sie einzuschränken.

Beispiele

1. Herstellung der Dispersionen

1.1 Dispersion D1

Ein Gemisch aus

150 g Wasser
5,6 g einer 20 Gew.-%igen wäßrigen Lösung eines ethoxylierten p-Isooctylphenols (EO-Grad 25),
0,48 g einer 35 Gew.-%igen wäßrigen Lösung eines Na-Salzes eines sulfatierten und ethoxylierten p-Isooctylphenols (EO-Grad 25),
3,9 g einer 10 Gew.-%igen wäßrigen Ameisensäure-Lösung,
1,7 g Natriumhydrogencarbonat und
3,4 g einer 20 Gew.-%igen wäßrigen Polyacrylamid-Lösung

wurde auf 90°C erhitzt. Anschließend wurden zu diesem Gemisch zeitgleich beginnend und unter Aufrechterhaltung der Innentemperatur von 90°C in 2 h 742,8 g einer wäßrigen Monomeremulsion, bestehend aus

403,2 g n-Butylacrylat,
140,0 g Styrol,
11,2 g Acrylamid,
5,6 g Methacrylamid,
8,4 g einer 20 Gew.-%igen wäßrigen Lösung eines ethoxylierten p-Isooctylphenols (EO-Grad 25),
11,5 g einer 35 Gew.-%igen wäßrigen Lösung eines Na-Salzes eines sulfatierten und ethoxylierten p-Isooctylphenols (EO-Grad 25) und
162,9 Wasser

und in 2,5 h eine Lösung von 3,3 g Natriumperoxodisulfat in 90 g Wasser kontinuierlich zugetropft. Danach wurde das Reaktionsgemisch noch 120 min bei 90°C gerührt und auf 60°C abgekühlt. Nach Zugabe einer Lösung von 1,1 g t-Butylhydroperoxid in 5,5 g Wasser wurde bei dieser Temperatur innerhalb von 1 h eine Lösung von 0,6 g Natriumhydroxymethansulfinat in 15 g Wasser zugegeben und 0,5 h nachgerührt. Nach 15 min kühlte man auf Raumtemperatur ab und neutralisierte mit 4 ml einer 20 Gew.-%igen, wäßrigen Calciumhydroxid-Aufschlämmung. Nach Filtration wurde eine Dispersion mit einem Feststoffgehalt von 55,3%, einer Lichtdurchlässigkeit einer 0,01 Gew.-%igen Dispersion bei 20°C und einer Schichtdicke von 2,5 cm "LD-Wert") von 8% und einem pH-Wert von 8,7 erhalten. Die Glastemperatur (DSC-midpoint, s.o.) des Polymerisats betrug -15°C.

1.2 Dispersion D2

Es wurde wie bei Dispersion D1 verfahren, jedoch bestand der Monomerenemulsionszulauf aus

291,2 g n-Butylacrylat,
252,0 g Styrol,
11,2 g Acrylamid,
5,6 g Methacrylamid,
8,4 g einer 20 Gew.-%igen wäßrigen Lösung eines ethoxylierten p-Isooctylphenols (EO-Grad 25),
11,5 g einer 35 Gew.-%igen wäßrigen Lösung eines Na-Salzes eines sulfatierten und ethoxylierten p-Isooctylphenols (EO-Grad 25) und
162,9 g Wasser

und es wurde anstelle von 4 ml einer 20 Gew.-%igen wäßrigen Calciumhydroxid-Aufschlämmung mit 3,5 g einer 10 Gew.-%igen wäßrigen Ammoniak-Lösung neutralisiert. Nach Filtration wurde eine Dispersion mit einem Feststoffgehalt von 55,4%, einer Lichtdurchlässigkeit einer 0,01 Gew.-%igen Dispersion bei 20°C und einer Schichtdicke von 2,5 cm ("LD-Wert") von 9% und einem pH-Wert von 7,3 erhalten. Die Glastemperatur (DSC-midpoint, s.o.) des Polymerisats betrug +15°C.

1.3 Dispersion D3

Es wurde wie bei Dispersion D1 verfahren, jedoch bestand der Monomerenemulsionszulauf aus

487,2 g n-Butylacrylat,
56,0 g Styrol,
11,2 g Acrylamid,
5,6 g Methacrylamid,
8,4 g einer 20 Gew.-%igen wäßrigen Lösung eines ethoxylierten p-Isooctylphenols (EO-Grad 25),
11,5 g einer 35 Gew.-%igen wäßrigen Lösung eines Na-Salzes eines sulfatierten und ethoxylierten p-Isooctylphenols (EO-Grad 25) und
162,9 g Wasser.

Nach Filtration wurde eine Dispersion mit einem Feststoffgehalt von 52,7%, einer Lichtdurchlässigkeit einer 0,01 Gew.-%igen Dispersion bei 20°C und einer Schichtdicke von 2,5 cm ("LD-Wert") von 10% und einem pH-Wert von 7,9 erhalten. Das Polymerisat wies eine Glastemperatur (DSC-midpoint, s.o.) von -28°C auf.

1.4 Dispersion D4

In einem Polymerisationsgefäß wurde eine Mischung aus

500 g Wasser
2,5 g Natriumacetat
2,5 g Butanol und
10 g einer ethoxylierten Cellulose (Natrosol® 250 GR)

auf die Polymerisationstemperatur von 80°C erwärmt. Dann wurden auf einmal zunächst 150 g Zulauf I und danach 10 g Zulauf II in das Polymerisationsgefäß eingetragen und 20 min bei 80°C polymerisiert. Anschließend wurde zeitgleich beginnend die Restmenge von Zulauf I (innerhalb von 3 h) und die Restmenge von Zulauf II (innerhalb von 3,5 h) unter Aufrechterhaltung der 80°C, kontinuierlich zudosiert. Danach wurde noch 1 h bei 80°C gerührt und schließlich auf Raumtemperatur abgekühlt.
Der Feststoffgehalt der resultierenden wäßrigen Polymerdispersion betrug 50,2 Gew.-%. Ihr pH-Wert lag bei 4 und der LD-Wert (25°C) betrug 20% (0,01 gew.-%ige Verdünnung). Das dispergierte Polymerisat wies eine Glasübergangstemperatur von -2°C (DSC-midpoint s.o.) auf.
Zulauf I: 600 g Vinylpropionat

200 g tert.-Butylacrylat
200 g n-Butylacrylat
160 g eines Gemisches aus 150 g Emulgatorlösung (20 gew.-%ige wäßrige Lösung von ethoxyliertem p-Isooctylphenol mit einem EO-Grad von 25) und 10 g eines Blockcopolymeren aus Ethylenoxid und Propylenoxid (molares Verhältnis EO:PO = 0,7 und relatives zahlenmittleres Molekulargewicht = 3200) und

343 g Wasser

Zulauf II: 5 g Natriumperoxidsulfat in

100 g Wasser.

### 1.5. Dispersion D5

In einem Polymerisationsgefäß wurde eine Lösung aus

6000 g Wasser und

17 g einer 45 gew.-%igen wäßrigen Lösung der Dowfax 2A1 entsprechenden grenzflächenaktiven Substanz

auf die Polymerisationstemperatur von 80°C erwärmt. Anschließend wurden nacheinander auf einmal 1087 g Zulauf I und 108 g Zulauf II ins Polymerisationsgefäß gegeben und 30 min bei 80°C polymerisiert. Anschließend wurden unter Aufrechterhaltung der Polymerisationstemperatur die Restmengen der Zuläufe I und II zeitgleich beginnend während 3,5 h kontinuierlich zugeführt. Anschließend wurde das Reaktionsgemisch 4 h bei 80°C sich selbst überlassen. Abschließend wurde auf Raumtemperatur abgekühlt und mit 420 g einer 25 gew.-%igen wäßrigen Natriumhydroxidlösung neutralisiert.

Der Feststoffgehalt der resultierenden wäßrigen Polymerisatdispersion betrug 50,9 %. Ihr pH-Wert lag bei 8 und der LD-Wert (25°C) betrug 46% (0,01 gew.-%ige Verdünnung). Das dispergierte Polymerisat wies eine Glasübergangstemperatur von 60°C (DSC-midpoint) auf.

Zulauf I:

12150 g Styrol

2250 g Butadien

450 g einer 50%igen wäßrigen Lösung von Acrylamid

375 g Acrylsäure

120 g tert.-Dodecylmercaptan

117 g einer 45 gew.-%igen wäßrigen Lösung der Dowfax 2A1 entsprechenden grenzflächenaktiven Substanz

250 g einer 15 gew.-%igen wäßrigen Lösung des Natriumsalzes des Schwefelsäurehalbesters von Laurylalkohol und

6033 g Wasser.

Zulauf II: 150 g Natriumperoxidsulfat und

200 g Wasser.

### 2. Herstellung der Sprühhilfsmittel

### 2.1 Sprühhilfsmittel S1

1,147 kg Phenol wurden bei 60°C vorgelegt und unter Kühlen mit 1,38 kg konzentrierter Schwefelsäure derart versetzt, daß die Innentemperatur stets unter 110°C lag. Nach beendeter Zugabe ließ man 3 h bei 105 bis 110°C Innentemperatur nachreagieren. Das Reaktionsgemisch wurde auf 50°C abgekühlt und unter Einhaltung einer Innentemperatur von 50 bis 55°C portionsweise mit 0,84 kg einer 30 Gew.-%igen wäßrigen Formaldehydlösung versetzt. Nach beendeter Zugabe gab man sofort 0,75 kg vollentsalztes Wasser hinzu, heizte auf 95 bis 100°C auf und ließ 4 h bei dieser Temperatur weiterreagieren. Es wurde auf 60°C abgekühlt und weitere 0,83 kg vollentsalztes Wasser hinzugegeben. Bei einer Fällungstemperatur von 65°C gab man 2,25 kg einer 35 Gew.-%igen Calciumhydroxid-Schlämme in vollentsalztem Wasser hinzu, kühlte auf Raumtemperatur ab und filtrierte über eine 200-μm-Sieb ab. Der pH-Wert der so erhaltenen 35 Gew.-%igen wäßrigen Lösung betrug 8,2.

### 2.2 Sprühhilfsmittel SV2

Es wurde wie bei S1 verfahren, jedoch betrug die Kondensationsdauer bei 95 bis 100°C nunmehr 6,5 h (anstelle 4 h bei S1). Der pH-Wert der erhaltenen 34 Gew.-%igen Lösung lag bei 7,8.

Die Sprühhilfsmittel wurden hinsichtlich ihrer Molekulargewichte mittels Gelpermeationschromatographie charakterisiert. Die Diskriminierung erfolgte an 3 nacheinander geschalteten Säulen (l = 300 mm, d = 8 mm), die mit einem 10 μ-Filter ausgerüstet und die mit Polymeren definierter Porosität beschickt waren (HEMA BIO der Firma Polymer Standards Service GmbH, Mainz mit 40, 100 und 1000 Å). Als mobile Phase diente eine Mischung aus 60 Gew.-

% einer 0,1 M Lösung von Natriumnitrat, 30 Gew.-% Tetrahydrofuran (p.A.) und 10 Gew.-% Acetonitril (p.a.). Als interner Standard für die Flußkorrektur wurde 1% Aceton zugesetzt. Die Proben wurden mit entionisiertem Wasser auf einen Feststoffgehalt von 0,5 Gew.-% verdünnt und bei einem Fluß von 1,50 ml/min und einer Temperatur von 60°C chromatographiert. Die Detektion erfolgte UV-spektrometrisch bei einer Wellenlänge von 254 nm. Zur Kalibrierung wurden Polystyrolsulfonate (Na-Salz M = 1370 - 1010000 Dalton) sowie Naphthalinmono, -di- und -trisulfonsäure-Natriumsalze verwendet. Die Ergebnisse sind in Tabelle 1 zusammengefaßt.

Tabelle 1

| Trocknungshilfsmittel | $M_n$ [g/mol] | $M_w$ [g/mol] | $M_w/M_n$ | m > 10000 g/mol [Gew.-%][2] |
|---|---|---|---|---|
| S1 | 750 | 8.000 | 10,7 | 14 |
| SV2[1] | 2.100 | 31.000 | 14,8 | 55 |

[1] Vergleichssprühhilfsmittel

[2] Anteil an Kondensaten mit Molmassen oberhalb 10.000 g/mol

3. Herstellung der erfindungsgemäßen und der Vergleichspolymerisatpulver:

Für die Herstellung der trockenen Polymerisatpulver wurden die Polymerisat-Dispersionen auf einen Feststoffgehalt von 40%, die Sprühhilfsmittel auf einen Feststoffgehalt von 20% verdünnt. Dann gab man rasch und unter kräftigem Rühren die Dispersion zum Sprühhilfsmittel und stellte gegebenenfalls mit vollentsalztem Wasser einen Feststoffgehalt der Mischung von 35% ein. Die Sprühtrocknung erfolgte in einem Minor-Labortrockner der Fa. GEA Wiegand GmbH (Geschäftsbereich Niro) mit Scheiben- oder Zweistoffdüsenzerstäubung bei einer Turm-Eingangstemperatur von 130°C und einer Turm-Ausgangstemperatur von 60°C (Leistung: ca. 2 kg Sprühspeise/h). Als Anti-Blockmittel wurden gleichzeitig mit der Sprühspeise ca. 2,0-3,0 Gew.-% (bezogen auf feste Polymerisat-Mischung) einer feinteiligen Kieselsäure in die Trocknungskammer zudosiert. Mengenverhältnisse, die Trocknungsbedingungen sowie deren Resultate sind in Tabelle 2 zusammengefaßt.

Die Redispergierbarkeit der Polymerisatpulver wurde wie nachfolgend beschrieben untersucht:

In eine Glasflasche werden 90 g vollentsalztes Wasser eingewogen und 10 g Pulver zugegeben. Die Mischung wird mit einem Ultra-Turrax 1 min bei 9500 U/min gerührt und in einen Meßzylinder gefüllt. Der mit einem Kunststoffstopfen verschlossene Meßzylinder wird unbewegt 72 h gelagert. Die Redispersion wird anschließend gut geschüttelt und über ein 72-µm-Sieb filtriert. Das Sieb wird 12 h bei 80°C im Trockenschrank gelagert und der prozentuale Anteil des trockenen Koagulats an der eingewogenen Pulvermenge (10g) bestimmt.

Tabelle 2:

| Ergebnisse der Sprühtrocknung | | | | | | |
|---|---|---|---|---|---|---|
| Pulver | Dispersion | Sprühhilfsmittel[a] | Wandbelag | Pulverausbeute | Redispergierbarkeit[b] | |
| | | | | | Koagulat[c] | Bodensatz[d] |
| P1 | D1 | 7 T1 S1 | gering | 84% | 0,1% | 1% |
| P2 | D2 | 7 TI S1 | " | 76% | 0,03% | 0% |
| P3 | D3 | 7 TI S1 | " | 81% | 0,2% | 2% |
| P4 | D4 | 7 T1 S1 | " | 77% | 0,4% | 5% |
| P5 | D5 | 7 T1 S1 | " | 80% | 0,3% | 6% |
| PV6 | D2 | 7 TI SV2 | leicht | 72% | 1,1% | 15% |

a) Gewichtsteile festes Sprühhilfsmittel, bezogen auf 100 Gewichtsteile Festanteil der Dispersion

b) bei Feststoffgehalt 10% nach 72 h

c) über ein 72 µm Sieb abfiltriertes Koagulat, getrocknet bei 80°C über Nacht im Vergleich zu redispergierter Pulvermenge

d) bezogen auf 100 ml Redispersion

**Patentansprüche**

1.  Verwendung von Phenolsulfonsäure-Formaldehyd-Kondensationsprodukten mit einem zahlenmittleren Molekulargewicht $M_n$ < 1.500 Dalton oder deren Salzen als Hilfsmittel bei der Trocknung wäßriger Polymerisatdispersionen.

2. Verwendung nach Anspruch 1, wobei die Phenolsulfonsäure-Formaldehyd-Kondensationsprodukte ein zahlenmittleres Molekulargewicht $M_n$ im Bereich von 600 bis 1200 Dalton und eine Verteilung $M_w/M_n$ im Bereich von 5 bis 15 auf weisen.

3. Verwendung gemäß Anspruch 1 oder 2, wobei der Anteil an Phenolsulfonsäure-Formaldehyd-Kondensaten mit Molmassen oberhalb 10.000 Dalton weniger als 25 Gew.-% an der Gesamtmenge des Kondensationsprodukts ausmacht.

4. Verwendung gemäß einem der Ansprüche 1 bis 3, wobei die Phenolsulfonsäure-Formaldehyd-Kondensationsprodukte in Form ihrer Alkali- oder Erdalkalimetallsalze oder der Ammoniumsalze eingesetzt werden.

5. Verwendung gemäß einem der Ansprüche 1 bis 4, wobei das Polymerisat der Dispersion eine Glastemperatur unterhalb 65°C aufweist.

6. Verwendung gemäß einem der Ansprüche 1 bis 5, wobei das Polymerisat aufgebaut ist

   a) 80 bis 100 Gew.-% wenigstens eines Monomers, das ausgewählt ist unter vinylaromatischen Verbindungen, Estern $\alpha,\beta$-ungesättigter $C_3$-$C_6$-Carbonsäuren oder $C_4$-$C_8$-Dicarbonsäuren mit $C_1$-$C_{12}$-Alkanolen, Vinyl oder Allylestern von $C_1$-$C_{12}$-Carbonsäuren und Butadien sowie
   b) 0 bis 20 Gew.-% wenigstens eines weiteren Monomers, das wenigstens eine ethylenisch ungesättigte Bindung aufweist.

7. Verwendung gemäß Anspruch 6, wobei das Monomer a) ausgewählt ist unter n-Butylacrylat, tert.-Butylacrylat, 2-Ethylhexylacrylat, Methylmethacrylat, tert.-Butylmethacrylat, Vinylacetat, Vinylpropionat, Butadien und Styrol.

8. Verwendung gemäß Anspruch 6 oder 7, wobei das Monomer b) ausgewählt ist unter (Meth)acrylsäure, (Meth)acrylamid, (Meth)acrylnitril, Acrylamido-2-methylpropansulfonsäure, Vinylpyrrolidon, Hydroxyethyl(meth)acrylat und/oder Hydroxypropyl(meth)acrylat.

9. Verfahren zur Trocknung von Polymerisatdispersionen, dadurch gekennzeichnet, daß man als Trocknungshilfsmittel wenigstens eines der in den Ansprüchen 1 bis 4 definierten Phenolsulfonsäure-Formaldehyd-Kondensationsprodukte verwendet.

10. Verfahren nach Anspruch 9, dadurch gekennzeichnet, daß man 1 bis 30 Gew.-%, insbesondere 3 bis 15 Gew.-%, Trocknungshilfsmittel, bezogen auf das Polymerisat verwendet.

11. Verfahren nach Anspruch 9 oder 10, dadurch gekennzeichnet, daß die Trocknung des Polymerisats durch Sprühtrocknung erfolgt.

12. , Verfahren nach Anspruch 11, dadurch gekennzeichnet, daß die Eingangstemperatur des Warmluftstroms 100 bis 200°C und die Ausgangstemperatur 60 bis 80°C beträgt.

13. Polymerisatpulver, erhältlich durch ein Verfahren gemäß einem der Ansprüche 9 bis 12.

14. Polymerisatpulver gemäß Anspruch 13, umfassend eine Polymerisatdispersion, wie sie durch einen der Ansprüche 5 bis 8 definiert wird.

15. Polymerisatpulver gemäß Anspruch 13 oder 14, umfassend ein Trocknungshilfsmittel, wie es durch die Ansprüche 1 bis 4 definiert wird.

16. Verwendung des Polymerisatpulvers nach Anspruch 14 oder 15 als Bindemittel in hydraulisch abbindenden Massen, Anstrichstoffen, Lacken, Klebstoffen, Beschichtungsmassen und Kunstharzputzen sowie zur Modifizierung von mineralischen Baustoffen.

17. Mineralische Bindebaustoffe, enthaltend ein Polymerisatpulver gemäß einem der Ansprüche 13 bis 15.

18. Mineralische Bindebaustoffe nach Anspruch 17 in Form einer Trockenmörtelzubereitung, bestehend aus

20 bis 60 Gew.-% mineralischem Bindemittel,
0,1 bis 20 Gew.-% Polymerisatpulver gemäß einem der Ansprüche 13 bis 15,
bis zu 25 Gew.-% üblichen Hilfsmitteln und
als Restmenge Zuschläge wie Sand, Füllstoffe, Pigmente, natürliche Fasern und/oder synthetische Fasern.

**Claims**

1. The use of phenolsulfonic acid-formaldehyde condensates having a number-average molecular weight $M_n$ < 1500 daltons or salts thereof as assistants in the drying of aqueous polymer dispersions.

2. The use as claimed in claim 1, wherein the phenolsulfonic acid-formaldehyde condensates have a number-average molecular weight $M_n$ of from 600 to 1200 daltons and a distribution $M_w/M_n$ of from 5 to 15.

3. The use as claimed in claim 1 or 2, wherein the proportion of phenolsulfonic acid-formaldehyde condensates having molar masses above 10,000 daltons is less than 25% by weight of the total amount of condensate.

4. The use as claimed in any of claims 1 to 3, wherein the phenolsulfonic acid-formaldehyde condensates are employed in the form of their alkali metal salts or alkaline earth metal salts or ammonium salts.

5. The use as claimed in any of claims 1 to 4, wherein the polymer of the dispersion has a glass transition temperature below 65°C.

6. The use as claimed in any of claims 1 to 5, wherein the polymer is composed of

    a) from 80 to 100% by weight of at least one monomer selected from vinyl-aromatic compounds, esters of $\alpha$, $\beta$-unsaturated $C_3$-$C_6$-carboxylic acids or $C_4$-$C_8$-dicarboxylic acids with $C_1$-$C_{12}$-alkanols, vinyl esters or allyl esters of $C_1$-$C_{12}$-carboxylic acids, and butadiene, and
    b) from 0 to 20% by weight of at least one further monomer which has at least one ethylenically unsaturated bond.

7. The use as claimed in claim 6, wherein the monomer a) is selected from n-butyl acrylate, tert-butyl acrylate, 2-ethylhexyl acrylate, methyl methacrylate, tert-butyl methacrylate, vinyl acetate, vinyl propionate, butadiene and/or styrene.

8. The use as claimed in claim 6 or 7, wherein the monomer b) is selected from (meth)acrylic acid, (meth)acrylamide, (meth)acrylonitrile, acrylamido-2-methylpropanesulfonic acid, vinylpyrrolidone, hydroxyethyl (meth)acrylate and/or hydroxypropyl (meth)acrylate.

9. A process for drying polymer dispersions, which comprises using at least one of the phenolsulfonic acid-formaldehyde condensates defined in claims 1 to 4 as drying assistant.

10. A process as claimed in claim 9, wherein from 1 to 30% by weight, in particular from 3 to 15% by weight, of drying assistant is used, based on the polymer.

11. A process as claimed in claim 9 or 10, wherein the polymer is spray dried.

12. A process as claimed in claim 11, wherein the entry temperature of the stream of hot air is from 100 to 200°C and the exit temperature is from 60 to 80°C.

13. A polymer powder obtainable by a process as claimed in any of claims 9 to 12.

14. A polymer powder as claimed in claim 13, comprising a polymer dispersion as defined in any of claims 5 to 8.

15. A polymer powder as claimed in claim 13 or 14, comprising a drying assistant as defined in any of claims 1 to 4.

16. The use of a polymer powder as claimed in claim 14 or 15 as a binder in hydraulically setting compositions, paints, lacquers, adhesives, coating compositions and synthetic-resin renders and for modifying mineral building materials.

**17.** A binding mineral building material comprising a polymer powder as claimed in any of claims 13 to 15.

**18.** A binding mineral building material as claimed in claim 17 in the form of a dry mortar formulation consisting of

> from 20 to 60% by weight of mineral binder,
> from 0.1 to 20% by weight of a polymer powder as claimed in any of claims 13 to 15,
> up to 25% by weight of customary auxiliaries, and,
> as the remainder, aggregates such as sand, fillers, pigments, natural fibers and/or synthetic fibers.

**Revendications**

**1.** Utilisation de produits de condensation d'acide phénolsulfonique/formaldéhyde ayant une masse moléculaire moyenne en nombre de $M_n < 1\,500$ Daltons ou leurs sels comme adjuvants pour le séchage de dispersions aqueuses de polymère.

**2.** Utilisation selon la revendication 1, dans laquelle les produits de condensation d'acide phénolsulfonique/formaldéhyde présentent une masse moléculaire moyenne en nombre $M_n$ dans la plage de 600 à 1200 Daltons et une polymolécularité $M_m/M_n$ dans la plage de 5 à 15.

**3.** Utilisation selon la revendication 1 ou 2, dans laquelle la teneur en condensats d'acide phénolsulfonique/formaldéhyde ayant des masses molaires supérieures à 10.000 Daltons est inférieure à 25% en poids de la quantité totale du produit de condensation.

**4.** Utilisation selon l'une quelconque des revendications 1 à 3, dans laquelle les produits de condensation d'acide phénolsulfonique/formaldéhyde sont mis en oeuvre sous la forme de leurs sels de métal alcalin ou alcalino-terreux ou sels d'ammonium.

**5.** Utilisation selon l'une des revendications 1 à 4, dans laquelle le polymère de la dispersion présente une température de transition vitreuse inférieure à 65°C.

**6.** Utilisation selon l'une des revendications 1 à 5, dans laquelle le polymère est constitué

> a) de 80 à 100% en poids d'au moins un monomère, qui est choisi parmi les composés vinylaromatiques, les esters d'acides carboxyliques en $C_3$ à $C_6$ ou dicarboxyliques en $C_4$ à $C_8$ à insaturation en $\alpha$, $\beta$ avec des alcanols en $C_1$ à $C_{12}$, les esters vinyliques ou allyliques d'acides carboxyliques en $C_1$ à $C_{12}$ et le butadiène ainsi que
> b) de 0 à 20% en poids d'au moins un monomère supplémentaire qui présente au moins une liaison à insaturation éthylénique.

**7.** Utilisation selon la revendication 6, dans laquelle le monomère a) est choisi parmi l'acrylate de n-butyle, l'acrylate de tert-butyle, l'acrylate de 2-éthylhexyle, le (méth)acrylate de méthyle, le (méth)acrylate de tert-butyle, l'acétate de vinyle, le propionate de vinyle, le butadiène et le styrène.

**8.** Utilisation selon la revendication 6 ou 7, dans laquelle le monomère b) est choisi parmi l'acide (méth)acrylique, le (méth)acrylamide, le (méth)acrylonitrile, l'acide acrylamido-2-méthylpropanesulfonique, la vinylpyrrolidone, le (méth)acrylate d'hydroxyéthyle et/ou le (méth)acrylate d'hydroxypropyle.

**9.** Procédé de séchage de dispersions de polymère, caractérisé en ce que l'on utilise comme adjuvants de séchage au moins un des produits de condensation d'acide phénolsulfonique/formaldéhyde définis selon les revendications 1 à 4.

**10.** Procédé selon la revendication 9, caractérisé en ce que l'on utilise 1 à 30% en poids, en particulier 3 à 15% en poids, d'adjuvants de séchage, par rapport au polymère.

**11.** Procédé selon la revendication 9 ou 10, caractérisé en ce que le séchage du polymère s'effectue au moyen d'un séchage par pulvérisation.

**12.** Procédé selon la revendication 11, caractérisé en ce que, la température d'entrée du courant d'air chaud est de 100 à 200°C et la température de sortie est de 60 à 80°C.

**13.** Poudre de polymère, que l'on peut obtenir au moyen d'un procédé selon l'une quelconque des revendications 9 à 12.

**14.** Poudre de polymère selon la revendication 13, comprenant une dispersion de polymère, telle qu'elle est définie selon l'une quelconque des revendications 5 à 8.

**15.** Poudre de polymère selon la revendication 13 ou 14, comprenant un adjuvant de séchage, tel qu'il est défini selon les revendications 1 à 4.

**16.** Utilisation de poudre de polymère selon la revendication 14 ou 15 en tant qu'agent liant dans les masses à prise hydraulique, les peintures, les laques, les colles, les masses de revêtement et les enduits à résine synthétique ainsi que pour modifier des matériaux de construction à base minérale.

**17.** Matériaux de construction liants à base minérale, contenant une poudre de polymère selon l'une quelconque des revendications 13 à 15.

**18.** Matériaux de construction liants à base minérale selon la revendication 17 sous forme d'une préparation de mortier sec, constitués de

    20 à 60% en poids d'agent liant à base minérale,
    0,1 à 20% en poids de poudre de polymère selon l'une quelconque des revendications 13 à 15,
    jusqu'à 25% en poids d'adjuvants habituels et en tant que complément, des additifs tels que le sable, les charges, les pigments, les fibres naturelles et/ou les fibres synthétiques.